# EUROPEAN PATENT APPLICATION

(11) **EP 1 179 421 A2**
(43) Date of publication of application: **13.02.2002**
(21) Application number: 01119045.1
(22) Date of filing: 07.08.2001
(51) Int. Cl.: B32B 27/36

(54) **Biaxially oriented polyester film for window application**

(30) Priority: 11.08.2000 JP 2000244318
(71) Applicant: Mitsubishi Polyester Film Corporation, Minato-ku, Tokyo (JP)
(72) Inventor: Masuda, Narihiro, Mitsubishi Polyester Film Corp., Sakata-gun, Shiga-ken (JP)
(74) Representative: TER MEER STEINMEISTER & PARTNER GbR

(57) **Abstract**

The present invention relates to a biaxially oriented polyester film for window application, which is a co-extruded laminated polyester film comprising at least three polyester layers including an intermediate layer containing a dye, said film having an antistatic coating on at least one side thereof, said antistatic coating having a specific surface resistance of not more than 1.0 × 10¹³ Ω.

## Description

### BACKGROUND OF THE INVENTION

The present invention relates to a biaxially oriented polyester film for window application, more particularly to a biaxially oriented polyester film which, in use, is applied (stuck) on glass such as windows of automobiles and architectural structures.

Polyester films having excellent transparency, light resistance, water resistance, heat resistance, chemical resistance and mechanical strength are popularly used as films for window application - films which are applied (stuck) on the windows of automobiles, buildings, etc., for the purposes of protection of privacy, impartation of aesthetic effect, adjustment of the sunshine, prevention of scattering of glass pieces in the event of accidental break of glass, etc.

The present inventors had already proposed in Japanese Patent No. 2,699,397 use of a composite polyester film of three or more laminations containing a dye in the intermediate layer as a light-shielding film for windows.

These light-shielding films are mostly of a layer structure in which usually a hard coat is provided on one side while a paste is applied on the opposite side to attach a release film. In making such light-shielding films for windows, it usually needs to conduct solvent type hard coating and pasting. The problem involved in this operation is that static electricity is generated with a random or regular pattern on the film surface, so that when hard coating or pasting is performed on this film, there tends to arise coating irregularity of the same pattern as that of static electricity generated on the film surface.

To overcome this problem, various measures have been taken, such as use of a powerful static eliminator for getting rid of the pattern of static electricity on the film surface. However, it is hardly possible with a static eliminator to effectively eliminate the once generated static electricity pattern, and coating irregularity can not be avoided.

Also, when a light-shielding film provided with a hard coat is left stuck on window glass, the film tends to collect the drifting particles in the air such as dust and tobacco smoke due to charging of the hard coated side, giving rise to troubles such as fouling of the film surface.

As a result of the present inventors' earnest studies to solve the above problem, it has been found that this problem can be solved by a film having a specific laminated layer structure.

The present invention has been attained on the basis of the above finding.

### SUMMARY OF THE INVENTION

The object of the present invention is to provide a film having excellent light-shielding effect, good coating and adhesive properties with hard coating materials and pastes (sticking agents and adhesives), and capable of long-time use as a light-shielding film for windows.

To attain the above aim, in the first aspect of the present invention, there is provided a biaxially oriented polyester film for window application, which is a co-extruded laminated polyester film comprising at least three polyester layers including an intermediate layer containing a dye, said film having an antistatic coating on at least one side thereof, said antistatic coating having a specific surface resistance of not more than 1.0 × 10¹³ Ω.

In the second aspect of the present invention, there is provided a biaxially oriented polyester film for window application, which is a co-extruded laminated polyester film comprising at least three polyester layers including an intermediate layer containing a dye, said film having on at least one side thereof a 0.01 to 1 µm thick antistatic coating comprising an antistatic agent and an organic polymeric binder, said antistatic coating having a specific surface resistance of not more than 1.0 × 10¹³ Ω, said film having a haze of not more than 5.0% as the whole structure and a visible light transmittance of 3 to 70%.

In the third aspect of the present invention, there is and the like can be used as the aromatic dicarboxylic acid, and ethylene glycol, diethylene glycol, 1,4-cyclohexanedimethanol and the like can be used as the aliphatic glycol. Typical examples of the polyesters usable in the present invention are polyethylene terephthalate (PET) and polyethylene-2,6-naphthalene dicarboxylate (PEN), PET being especially preferred because of a good balance of properties and cost.

The polyester used in the present invention may be a copolymer containing a third component(s) provided that the overall amount of such third component(s) is not more than 10 mol%, preferably not more than 5 mol%. The dicarboxylic acid moiety of the copolymer polyester may comprise one or more of isophthalic acid, phthalic acid, terephthalic acid, 2,6-naphthalenedicarboxylic acid, adipic acid, sebacic acid, oxycarboxylic acid (such as p-oxybenzoic acid) and the like, and the glycol moiety may comprise one or more of ethylene glycol, diethylene glycol, propylene glycol, butanediol, 1,4-cyclohexanedimethanol, neopentyl glycol and the like.

In the biaxially oriented polyester film for window application according to the present invention, it is essential that a dye be contained in at least one of the coextruded intermediate layers of the laminated film, and the dye used in the present invention needs to be one which shows absorption in the visible light region (380-780 nm). By containing such a dye, the visible light transmittance of the whole film is controlled to the range of 3 to 70%, preferably 5 to 50%.

Preferably, the dye used in the present invention can be substantially dissolved in polyesters. The expression "substantially dissolved" used here means that when the dye is mixed and kneaded with a polyester in its molten state, they are uniformly mixed up without leaving any aggregates, allowing the produced biaxially oriented film to have a haze of not more than 5.0%, preferably not more than 4.0%, as further discussed later. Also, the dye used in the present invention is preferably the one which is minimized in decomposition at the polyester molding temperature. From the viewpoint of chemical structure, preferred examples of the said dye are anthraquinone dyes, perinone dyes, perillene dyes, azomethine dyes, and heterocyclic dyes, but disperse dyes and oil-soluble dyes are advantageous in terms of dye formulation. The materials which are generally classified as pigment are also usable as dye if they can be dissolved in the molten polyester as mentioned above. Examples of such materials are the complex salts of phthalocyanine pigments with metallic ions such as copper, cobalt, nickel, zinc and chromium ions.

Usually several types of the said dyes are properly selected and mixed for providing a desired color tinge such as gray or brown tint. The content of the dyes in the polyester may be properly selected from the range of usually 0.01 to 10.0% by weight, preferably 0.05 to 5.0% by weight.

In the biaxially oriented polyester film for window application according to the present invention, a known ultraviolet absorber, radical trapping agent and/or other additives may be allowed to exist with the said dyes in the coextruded intermediate layer, but their addition should be confined within limits not causing cloudiness of the film and keeping the haze in the above-defined range.

As means for incorporating a dye (or dyes) and other additives in the base polyester in the present invention, a method may be employed in which they are added in the form of powder, paste or liquid when a film is melt molded, but in view of the problem of contamination of the apparatus and ease of change of formulation, it is preferable to use a method in which a master batch of the dye(s) and other base materials is prepared first and this master batch is added while being diluted with a clear resin in the course of melt molding of a film. In this melt molding operation, it is preferable to use a double-screw extruder for performing the operation while conducting mixing with good dispersion in the polyester.

In the polyester film of the present invention, in order to provide appropriate slipperiness of the external layer surface, there may be contained the fine particles of a size and amount sufficient to allow formation of fine protrusions on the coextruded surface layers on both sides. As such fine particles, it is possible to use, for example, one or a mixture of two or more of powdered silicon oxide, calcium carbonate, kaolin and crosslinked organic polymers having an average particle size of 0.02 to 5.0 µm. The amount of such fine particles to be added is properly selected from the range of 0.001 to 0.5% by weight, preferably 0.01 to 0.1% by weight, because this range of amount makes it possible to provide the minimum necessary slipperiness without increasing the film haze. The film is allowed to have an average surface roughness Ra of 0.005 to 0.05 µm by containing the said particles.

Further, in the polyester comprising the coextruded surface layers, known additives such as infrared absorber, ultraviolet absorber, etc., may be contained in the amounts commonly used.

Regarding the thickness of the coextruded surface layers and intermediate layer, the surface layers are preferably as small in thickness as possible for preventing the film from becoming clouded (increased in haze) as a whole. On the other hand, the surface layers are rather required to be as large as possible in thickness for preventing bleeding of the dye and other additives present in the intermediate layer. In view of this, usually the thickness of the surface layer on each side is preferably in the range of 0.5 to 5.0 µm, regardless of the overall thickness of the film. Both surface layers may be the same or different in thickness, but when different, both layers preferably have the thickness within the abovespecified range.

The biaxially oriented polyester film of the present invention has on at least one of its external layers an antistatic coating having a specific surface resistance of not more than 1.0 × 10¹³ Ω, preferably not more than 1.0 × 10¹² Ω. When the specific surface resistance exceeds 1.0 × 10¹³ Ω, the antistatic effect of the surface is insufficient and a static electricity pattern may be formed on the film surface.

The antistatic coating may be provided on the film which has gone through crystal orientation after biaxial stretching and heat setting, but it is more preferable to use so-called in-line coating in which coating is performed with a coating material diluted with a water-based solvent in the process of film formation, especially at the point of completion of longitudinal stretching (stretching in the machine direction), and the coated film is dried, stretched transversely and heat set to accomplish crystal orientation of the film and formation of the antistatic coating at the same time.

In the antistatic coating, an antistatic agent is added to provide the specific surface resistance mentioned above.

The antistatic agents usable in the present invention include anionic antistatic agents such as metal salts and quaternary amine salts of alkylsulfonic acid, metal salts and quaternary amine salts of alkylbenzenesulfonic acid, metal salts and quaternary amine salts of phosphoric esters, metal salts and quaternary amine salts of polystyrenesulfonic acid, and metal salts and quaternary amine salts of copolymers or oligomers of styrenesulfonic acid and monomers capable of radical polymerization and having double bonds (such as ethylene, styrene, acrylic acid, acrylic esters, methacrylic acid, methacrylic esters, vinyl chloride, vinyl acetate and vinyl ether). Of these compounds, salts of copolymer of styrenesulfonic acid are preferred.

It is also possible to use cationic antistatic agents such as alkylammonium chloride, alkylbenzene ammonium chloride, and polymers containing ionized nitrogen atoms or pyrrolidinium rings in the backbone. Ionene polymers can be cited as examples of the polymers containing ionized nitrogen atoms in the backbone. As concrete examples of the compounds, those described in Japanese Patent Publication (KOKOKU) Nos. 53-23377 and 54-10039, and Japanese Patent Application Laid-Open (KOKAI) Nos. 47-34581, 56-76451, 58-93710, 61-18750 and63-68687 can be cited. For further detail, see Alan D. Wilson and Harvard J. Prosser (Ed.): Developments in Ionic Polymers - 2, Elsevier Applied Science Publisher, 1986), Ionene Polymers: Properties and Applications). Of these compounds, polypyrrolidinium compounds are preferred.

Examples of the polymers containing pyrrolidinium rings in the backbone are shown in Japanese Patent Application Laid-Open (KOKAI) Nos. 1-146931, 1-166326, 1-171940, 1-171985, 1-174538, 1-174539, etc.

In addition to these antistatic agents, it is also possible to contain alkylene glycol polymers having a molecular weight of usually 100 to 2,000, preferably 500 to 1,000, such as polymethylene glycol, polyethylene glycol and polytetramethylene glycol. These alkylene glycol polymers are used for the purpose of lowering specific surface resistance or mitigating temperature dependency of antistatic performance.

In the antistatic coating, it is preferable to use, besides the antistatic agent mentioned above, an organic polymeric binder for improving durability of the coating and adhesion of the hard coat applied thereon. As such an organic polymeric binder, polyurethane resins, polyester resins, polyacrylate resins and their modified versions or mixtures are preferably used as they serve for bettering adhesion with the hard coat. In case where such an organic polymeric binder is used for in-line coating in which coating is performed in the film forming step using water as principal solvent, it is advisable to copolymerize an anionic, cationic or ampholytic hydrophilic substance in the molecule or to add a water dispersant to facilitate dissolution or fine dispersion of the binder in water.

In the present invention, both an antistatic agent and an organic polymeric binder are contained in the antistatic coating in such amounts that their content ratio will fall within the range of 1:9 to 8:2 (by weight). If the ratio of the antistatic agent is less than 10% by weight, there may not be obtained satisfactory antistatic effect, while if its ratio exceeds 80% by weight, desired coating durability may not be provided, and in case where a hard coat is provided on the antistatic coating, their adhesion may prove unsatisfactory.

A crosslinking agent may be further incorporated in the antistatic coating. Examples of the crosslinking agents usable in the present invention include hydroxymethylated or hydroxyalkylated urea-based compounds, melamine-based compounds, guanamine-based compounds, acrylamide-based compounds, polyamide-based compounds, epoxy compounds, oxazoline-based compounds, aziridine compounds, blocked polyisocyanate compounds, silane coupling agents, titanium coupling agents, zirco-aluminate coupling agents and the like. The crosslinking agent may be previously combined with the binder polymer.

Further, inorganic particles, such as pulverized silica, alumina, kaolin, calcium carbonate, titanium oxide, barium salt, etc., may be contained for improving adherence and slip characteristics of the antistatic coating. If necessary, other additives such as defoaming agent, coating properties improver, thickener, organic lubricant, organic polymer particles, antioxidant, etc., may also be contained.

The thickness of the antistatic coating in the film of the present invention is usually 0.01 to 1 µm, preferably 0.02 to 0.5 µm. If the thickness of this coating layer is less than 0.01 µm, the coating thickness may become non-uniform and the desired antistatic effect may not be obtained, or adhesion to the hard coat may prove unsatisfactory. On the other hand, if coating is applied in excess of 1 µm, there tend to arise the problems such as blocking of the films and deterioration of slip characteristics.

In the biaxially oriented polyester film for window application according to the present invention, it is preferable that the haze of the whole film including the said antistatic coating is not more than 5.0%, more preferably not more than 4.0%. If the film haze exceeds 5.0%, the film becomes cloudy conspicuously and loses enough transparency when applied on window glass.

In the biaxially oriented polyester film for window application according to the present invention, a known type of heat-curing or ultraviolet-curing hard coat mainly comprising an acrylic or methacrylic acid derivative may be provided on the said antistatic coating. This hard coat is not in-line coating but is formed by applying and drying a coating material, as a post-work and usually using an organic solvent, on the antistatic coating of the biaxially oriented polyester film finished with crystal orientation. This hard coat can be formed by using a known coating device such as reverse gravure coater, gravure coater, rod coater, air doctor coater, etc. Since an antistatic coating is provided in the biaxially oriented polyester film of the present invention, no random or regular pattern of static electricity is generated on the film surface, eliminating the possibility of causing nonuniformity of static electricity pattern in the hard coat forming operation.

In the polyester film of the present invention, the haze of the whole film including the hard coat is preferably not more than 5.0%, more preferably not more than 4.0%, especially not more than 3.0%. Since this hard coat is positioned on the exposed side when the film is stuck on a window, this layer preferably has a surface hardness not below "H" in rating by pencil hardness so that it will not scratch easily.

Also, the hard coat surface preferably has a specific resistance of not more than 1.0 × 10¹⁴ Ω, more preferably not more than 1.0 × 10¹³ Ω, to minimize deposition of dust, tobacco tar or such. This level of specific surface resistance may be provided by separately adding an antistatic agent in the hard coat, but this tends to cause clouding of the hard coat itself. To prevent this, it is preferred to make use of the antistatic effect of the antistatic coating present beneath the hard coat, without adding an extra antistatic agent to the hard coat.

For this purpose, smaller thickness of the hard coat is more advantageous, but on the other hand, larger thickness is preferred for maintaining the surface hardness at or above "H" in terms of pencil hardness. In order to satisfy these contradictory features at the same time, the thickness (dry thickness) of the hard coat is preferably set to fall within the range of 0.5 to 3.0 µm.

On the side opposite from the hard coat of the polyester film of the present invention, a known sticking agent or adhesive is applied for pasting the film on window glass. Application of such a sticking agent or adhesive on the film can be effected in the same way as in the case of providing the hard coat - applying and drying a coating material as post-work usually using an organic solvent on the antistatic coating of the biaxially oriented polyester film finished with orientation crystallization. Therefore, in the biaxially oriented polyeter film of the present invention, it is preferable that the said antistatic coating be provided on both sides so that no random or regular pattern of static electricity will be formed on both surfaces of the film.

A known ultraviolet absorber may be blended in the sticking agent or adhesive, or an infrared absorber may be added in an appropriate amount as practiced in the art. Also, a known plastic film which has been subjected to a release treatment by silicone coating may be pasted as a separator film to the sticking agent or adhesive.

A process for producing the laminated polyester film of the present invention is described below in detail, but the film of the present invention is not restricted by the following exemplification in any way.

First, the respective polyester materials are laminated and melt extruded into a multilayered sheet by using plural sets of extruder and a multi-manifold die or feed block, and the extrudate is cooled and solidified by the cooling rolls to obtain a non-stretched sheet. In this operation, in order to improve flatness of the sheet, it is preferable to elevate adhesion between the sheet and the rotary cooling drum, for which an electrostatic pinning method and/or a liquid coating method are preferably used.

The thus obtained non-stretched film is then stretched in the two axial directions to effect biaxial orientation. That is, the non-stretched film is first stretched usually 2.5 to 7 times, preferably 3.0 to 6 times in the machine direction at usually 70 to 120°C, preferably 80 to 110°C, by a roll stretcher, then further stretched usually 3.0 to 7 times, preferably 3.5 to 6 times in the transverse direction at usually 70 to 120°C, preferably 80 to 115°C, and successively heat treated at 170 to 250°C under tension or relaxation of not more than 30% to obtain a biaxially stretched film.

Stretching may be performed either by a method in which the film is stretched to the prescribed ratio by one stretching operation or a method in which the film is stretched in two or more stages until it has the prescribed stretch ratio. In the latter case, too, stretching is preferably conducted so that the stretch ratios in the two directions will finally come within the above-defined ranges. If necessary, the stretched film may be re-stretched in the machine direction and/or in the transverse direction before or after the heat treatment.

In the present invention, as stated above, it is essential to provide an antistatic coating on the surface of at least one side of the film, and especially in case where such an antistatic coating is formed by in-line coating, preferably a coating solution using a water-based solvent is applied on the film surface upon completion of stretching in the machine direction in the above process, and the coated film is dried, pre-heated and stretched transversely by a tenter and then heat set.

This antistatic coating may be formed by using a conventional coating device such as reverse gravure coater, gravure coater, rod coater, air doctor coater, etc.

According to the present invention, there is provided a film having excellent light-shielding effect, good coating and adhesive properties with hard coating material and paste (sticking agent or adhesive), and capable of long-time use after applied on window glass, so that its industrial value is high.

### EXAMPLES

The present invention is described in further detail with reference to the examples thereof, but it is to be understood that these examples are merely intended to be illustrative and not to be construed as limiting the scope of the invention. In the following Examples and Comparative Examples, all "parts" are by weight unless otherwise noted. The determination methods used in the present invention are as described below.
(1) Specific surface resistance
   A concentric circular electrode 16008A (trade name, mfd. by Yokokawa Hewlet Packard, Ltd.) comprising a 50 mmφ inner electrode and a 70 mmφ outer electrode was set on the test piece in an atmosphere of 23°C and 50% RH, then a voltage of 100 V was applied thereto and specific surface resistance of the test piece was measured by a high resistance meter 4329A (trade name, mfd. by the same company).
(2) Visible light transmittance
   Light transmittance of the film at the respective wavelengths was measured by a spectroscopic colorimeter SE-2000 (mfd. by Nippon Denshoku KK) using a D65 light source, and visible light transmittance was calculated according to JIS-S3107.
(3) Film haze
   Film haze was determined according to JIS-K7105 using a hazeometer NDH300A (mfd. by Nippon Denshoku KK).
(4) Surface roughness (Ra) of film
   The center line average roughness Ra (µm) was shown as surface roughness. It was determined in the following way using a surface roughness tester (SE-3F) mfd. by Kosaka Kenkyusho Ltd. A portion with a standard length L (2.5 cm) was cut out in the direction of the center line from a sectional curve of the sample film, and when the roughness curve (y) was expressed as y = f(x) in the x and y coordinates with the center line of the cut out portion represented by the x-axis and the direction of longitudinal magnification represented by the y-axis, the value given from the following equation was expressed as surface roughness in µm. The center line average roughness was determined by selecting 10 sectional curves from the sample film surface, measuring the center line roughness of the cut out portions from these sectional curves and calculating the average value thereof. Measurement was made under the following conditions: feeler tip radius = 2 µm; load = 30 mg; cut-off: 0.08 mm.
(5) Pencil hardness of hard coat surface
   Hard coat surface hardness was indicated by pencil hardness determined according to JIS-K5401
(6) Adhesive strength to hard coat
   The hard coat surface was cut crosswise to form 1-inchwide 100 squares and subjected to a 90° peel test (rate of pulling: 2 inches/min). Adhesion was rated according to the following criterion.
   A: number of squares which separated ≤ 5
   B: 5 number of squares which separated ≤ 20
   C: 20 number of squares which separated
(7) Susceptibility to fouling of hard coat

The hard coat surface was cleaned with moisten absorbent cotton, and after wiping out water with a fabric spectacle lens cleaner, the hard coat surface was rubbed with a dry fabric lens cleaner by moving it 10 times both ways at a constant speed with substantially no force applied. The comminuted cigarette ash was brought close to the hard coat surface, and the state of ash being drawn up by the film was evaluated and ranked as follows.
A: The film does not draw ash even when ash is brought into contact with the film.
B: The film slightly draws ash when ash is brought into contact with the film.
C: The film draws ash plentifully only when ash is brought close to the film.

The methods of producing the polyester materials used in the following Examples and Comparative Examples are described below.

### <Polyester A>

100 parts of dimethyl terephthalate, 60 parts of ethylene glycol and 0.09 part of magnesium acetate tetrahydrate were supplied into a reactor and heated while distilling away methanol to carry out an ester exchange reaction. The mixture was heated to 230°C taking a period of 4 hours after start of the reaction, at which point the ester exchange reaction was substantially completed. Then 0.04 part of ethyl acid phosphate and 0.04 part of antimony trioxide were added, and the mixture was further heated to 280°C with pressure reduced to 15 mmHg in 100 minutes. The pressure was gradually reduced successively till finally reaching 0.3 mmHg. 4 hours later, the system was returned to normal pressure to obtain polyester A containing substantially no fine particles. Intrinsic viscosity of this polyester was 0.70.

### <Polyester B>

100 parts of dimethyl terephthalate, 60 parts of ethylene glycol and 0.09 part of magnesium acetate tetrahydrate were supplied into a reactor and heated while distilling away methanol to carry out an ester exchange reaction. The mixture was heated to 230°C taking a period of 4 hours after start of the reaction, at which point the ester exchange reaction was substantially completed. Then an ethylene glycol slurry containing 2.0 parts of silica particles having an average diameter of 1.4 µm was added to the reaction system, and after further adding 0.04 part of ethyl acid phosphate and 0.04 part of antimony trioxide, the mixture was heated to 280°C with pressure reduced to 15 mmHg in 100 minutes. Pressure was gradually reduced to finally reach 0.3 mmHg. 4 hours later, the system was returned to normal pressure to obtain polyester B. The silica particle content of the obtained polyester B was 1.0% by weight, and its intrinsic viscosity was 0.70.

### <Polyester C>

Polyester A was supplied to a vented double-screw extruder, to which Diaresin Red HS, Blue H3G and Yellow F (all products of Mitsubishi Chemical Co., Ltd.) were added in admixture to the concentrations of 3.0% by weight, 5.5% by weight and 1.5% by weight, respectively, and the mixture was melted, kneaded and chipped to obtain a dye masterbatch (polyester C).

### Examples 1 and 2

Chips of polyester A and polyester C were supplied to an extruder for intermediate layer in an A:C ratio of 78.0:22.0 (Example 1) and 95.5:4.5 (Example 2) as the intermediate layer resins. Separately from this, chips of polyester A and polyester B were supplied to an extruder for external layers in an A:B ratio of 93.0:7.0 (same in both Example 1 and Example 2) as the external layer resins. Each of the extruders was a vented turning-in-different-direction double-screw extruder. The resins were extruded at the melting temperature of 290°C without drying, and the molten polymers were joined in the feed block and laminated. The extrudate was cooled and solidified on a cooling drum set to a surface temperature of 40°C using an electrostatic pinning method to obtain a three-layer laminated non-stretched sheet. This sheet was stretched 3.6 times in the machine direction at 83°C. On both sides of the obtained monoaxially stretched film, a water-dispersible coating material of the formulation shown below as antistatic coating composition 1 was uniformly applied to a coating thickness of 0.025 µm after formation of the film.

### <Antistatic coating composition 1>

40 parts by weight of polyurethane-based resin:
A polyurethane comprising principally isophorone diisocyanate as isocyanate moiety, polyester polyol comprising terephthalic acid, isophthalic acid, ethylene glycol and diethylene glycol as polyol moiety, and 2,2-dimethylolpropionic acid as chain extender,
30 parts by weight of sodium styrenesulfonate copolymerized acrylic resin:
   a copolymerized antistatic resin comprising principally Sodium p-styrenesulfonate, sodium methallylsulfonate and N,N'-dimethyl aminomethacrylate,

15 parts by weight of polyester resin:
a copolymer polyester containing terephthalic acid, isophthalic acid and sodium 5-sulfoisophthalate as dicarboxylic acid moiety, and ethylene glycol and
diethylene glycol as diol moiety,

10 parts by weight of Melamine-based crosslinking agent:
Methoxymethylolmelamine (hydroxymethylation degree: 5-6), and

5 parts by weight of Colloidal silica.

Then the film was led into a tenter where the film was dried and preheated, then stretched 3.8 times in the transverse direction and heat set at 225°C. Thereafter, the film was relaxed 5% in the width direction at 185°C, then cooled and wound up to form a roll of biaxially oriented film. The layer thickness profile of this film was 2/21/2 µm, with the overall thickness being 25 µm. The properties of this film are shown in Table 1.

The obtained rolled film was slit into a predetermined width, in a state where a cross-cut pattern of static electricity is liable to form, by using a hard rubber-made roll having a diamond cross-cut pattern on the surface as contact roll.

The film roll was set in a coater, coated with a hard coating material of the following composition by a #20 bar and dried at 90°C for one minute, after which the coating was further dried by a high pressure mercury lamp under the conditions of output = 120 w/cm; irradiation distance = 15 cm; speed of travel = 10 m/min, to form a 2 µm hard coat.

### <Hard coat composition>

30 parts by weight of acrylic resin (SEIKA-BEAM EXY-26 (S) produced by Dainichi Seika Kogyo KK),
35 parts by weight of Methyl ethyl ketone and
35 parts by weight of Toluene.

Examining the formed hard coat surface, it was found that the coat surface was free of nonuniformity of coating in the form of impression pattern of the cross-cut roll used for the slitter in both of Example 1 and Example 2. Next, this hard coated film was again set in a coater and an ethyl acetate solution of 40% polybutyl acrylate was applied on the side opposite from the hard coat by a #60 bar coater and dried at 90°C for 180 seconds to provide an approximately 15 µm thick adhesive layer. In this case, too, there was observed no nonuniformity of coating due to the generation of an static electricity pattern.

### Comparative Examples 1 and 2

Using the same materials as employed in Examples 1 and 2 (corresponding to Comparative Examples 1 and 2), melt extrusion (co-extrusion) and stretching in the machine direction were carried out in the same way as in Examples 1 and 2. Here, a water-dispersible coating material of the formulation (solids weight ratio) shown as adhesive coating composition 1 below was uniformly applied on both sides of the monoaxially stretched film to a coating thickness of 0.025 µm after film formation.

### <Adhesive coating composition 1>

65 parts by weight of polyurethane resin, (same as used in Examples 1 and 2),
20 parts by weight of polyester resin (same as used in Examples 1 and 2),
10 parts by weight of melamine-based crosslinking agent (same as used in Examples 1 and 2), and
5 parts by weight of colloidal silica, (same as used in Examples 1 and 2).

This film was then led into a tenter where it was dried, pre-heated, stretched in the transverse direction, heat set, relaxed in the width direction and cooled in the same way as in Examples 1 and 2, and then taken up to obtain a roll of biaxially oriented film. The layer thickness profile of this film was 2/21/2 µm, with the overall thickness being 25 µm. The properties of this film are shown in Table 1.

This film was slit to a predetermined width, in a state where a cross-cut pattern of static electricity is liable to form, by the same slitter as used in Examples 1 and 2.

The thus obtained film roll was subjected to the same coating operation as in Examples 1 and 2 to form a hard coat. Examination of the formed hard coat surface showed occurrence of nonuniformity of coating in the form of impression pattern of the cross-cut roll used for the slitter.

Then this hardcoated film was again set in the coater and subjected to coating in the same way as in Examples 1 and 2 to provide an adhesive layer on the side opposite from the hard coat.

In this case, too, there took place nonuniformity of coating due to the generation of a static electricity pattern in the shape of impression of the cross-cut roll used for slitting.

### Comparative Example 3

In the process of Examples 1 and 2, polyester A was used 100% as the resin for the intermediate layer while using the resin of Example 1 for the external layers, and otherwise the same operations (melt extrusion (co-extrusion), stretching in the machine direction, in-line coating, drying, pre-heating, stretching in the transverse direction, heat setting and relaxing in the width direction) as in Example 1 were carried out, the produced film being cooled and taken up to obtain a roll of biaxially oriented film. The layer thickness profile of this film was 2/21/2 µm, with the overall thickness being 25 µm. The properties of this film are shown in Table 1.

This rolled film was slit to a predetermined width, in a state where a cross-cut pattern of static electricity is liable to form, by the same slitter as used in Examples 1 and 2.

A hard coat was formed on this film in the same way as in Examples 1 and 2. Examination of the formed hard coat surface showed that it had no nonuniformity of coating in the form of the impression pattern of the cross-cut roll used for slitting.

Then this hard coated film was again set in the coater and subjected to the same coating operation as in Examples 1 and 2 to provide an adhesive layer on the side opposite from the hard coat. There was observed no nonuniformity of coating in the form of the impression pattern of the cross-cut roll used for the slitter.

However, the film had not light-shielding ability as no dye was added in the intermediate layer of the film.

### Examples 3 and 4

Using the same materials as employed in Examples 1 and 2 (corresponding to Examples 3 and 4), melt extrusion (co-extrusion) and stretching in the machine direction were conducted in the same way as in Examples 1 and 2. Here, a water-dispersible coating material of the formulation (solids weight ratios) shown as antistatic coating composition 2 below was uniformly applied on both sides of the monoaxially stretched film to a coating thickness of 0.04 µm after film formation.

### <Antistatic coating composition 2>

40 parts by weight of polypyrrolidium resin hydrochloride,
50 parts by weight of polyacryic resin (a copolymerized self-crosslinking acrylic resin mainly comprising methyl methacrylate and containing N-methylolacrylamide), and
10 parts by weight of melamine-based crosslinking agent (same as used in Examples 1 and 2)

This film was led into a tenter for performing drying, pre-heating, stretching in the machine direction, heat setting and relaxing in the width direction in the same way as in Examples 1 and 2, then cooled and taken up to obtain a roll of biaxially oriented film. The layer thickness profile of the film was 2/21/2 µm, with the overall thickness being 25 µm. The properties of this film are shown in Table 1.

This rolled film was slit to a predetermined width, in a state where a cross-cut pattern of static electricity is liable to form, by the same slitter as used in Examples 1 and 2 to make a film roll.

A hard coat was formed on this rolled film by the same operation as in Examples 1 and 2. Examination of the formed hard coat surface confirmed no nonuniformity of coating in the form of the impression pattern of the crosscut roll used for the slitter.

Then this hard coated film was again set in the coater and subjected to the same coating operation as in Examples 1 and 2 to provide an adhesive layer on the side opposite from the hard coat. Here, too, there was observed no nonuniformity of coating in the form of the impression pattern of the crosscut roll used for the slitter.

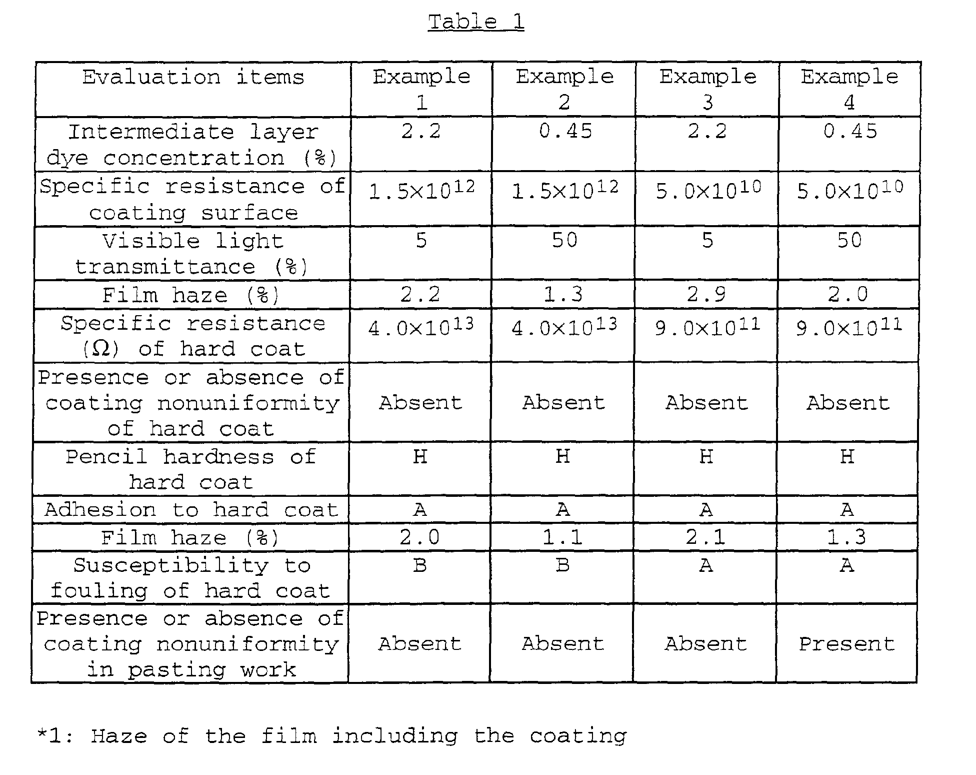

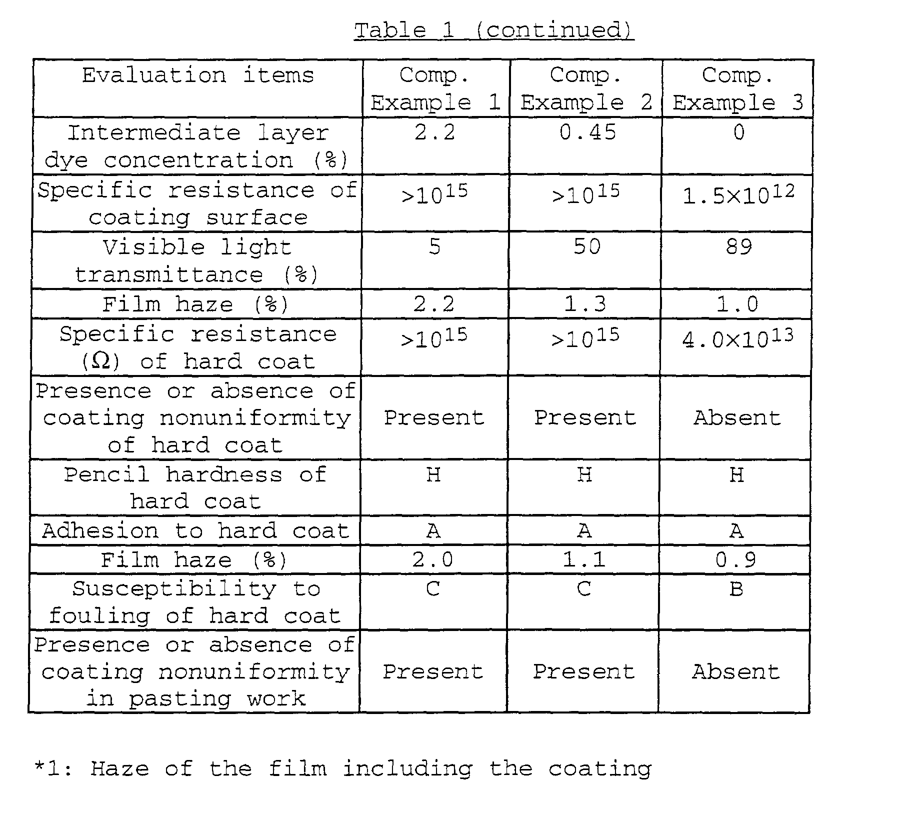

## Claims

1. A biaxially oriented polyester film for window application, which is a co-extruded laminated polyester film comprising at least three polyester layers including an intermediate layer containing a dye, said film having an antistatic coating on at least one side thereof, said antistatic coating having a specific surface resistance of not more than 1.0 × 10¹⁴ Ω.

2. A biaxially oriented polyester film for window application according to Claim 1 wherein the haze of the whole film is not more than 5.0%.

3. A biaxially oriented polyester film for window application according to Claim 1, said film having a visible light transmittance of 3 to 70%.

4. A biaxially oriented polyester film for window application according to Claim 1, wherein the thickness of the antistatic coating is 0.01 to 1 µm.

5. A biaxially oriented polyester film for window application according to Claim 1, wherein the antistatic coating comprises an antistatic agent and an organic polymeric binder.

6. A biaxially oriented polyester film for window application according to Claim 5, wherein the weight ratio of said antistatic agent/organic polymeric binder is 1/9 to 8/2.

7. A biaxially oriented polyester film for window application according to Claim 1, wherein a hard coat is provided on the antistatic coating on one side of the film.

8. A biaxially oriented polyester film for window application according to Claim 7, wherein the specific surface resistance of the hard coat is not more than 1.0 × 10¹⁴ Ω.

9. A biaxially oriented polyester film for window application according to Claim 1 having an antistatic coating on both sides of the film.

10. A biaxially oriented polyester film for window application according to Claim 9, wherein a hard coat comprising principally an acrylic acid derivative or a methacrylic acid derivative is provided on the antistatic coating on one side of the film.

11. A biaxially oriented polyester film for window application according to Claim 1, wherein the antistatic coating is formed by in-line coating.

12. A biaxially oriented polyester film for window application, which is a co-extruded laminated polyester film comprising at least three polyester layers including an intermediate layer containing a dye, said film having on at least one side thereof a 0.01 to 1 µm thick antistatic coating comprising an antistatic agent and an organic polymeric binder, said antistatic coating having a specific surface resistance of not more than 1.0 × 10¹³ Ω, said film having a haze of not more than 5.0% as the whole structure and a visible light transmittance of 3 to 70%.

13. A biaxially oriented polyester film for window application, which is a co-extruded laminated polyester film comprising at least three polyester layers including an intermediate layer containing a dye, said film having on at least one side thereof a 0.01 to 1 µm thick antistatic coating comprising an antistatic agent and an organic polymeric binder, said antistatic coating having a specific surface resistance of not more than 1.0 × 10¹³ Ω and formed by in-line coating, said film having a haze of not more than 5.0% as the whole structure and a visible light transmittance of 3 to 70%.

14. A biaxially oriented polyester film for window application, which is a co-extruded laminated polyester film comprising at least three polyester layers including an intermediate layer containing a dye, said film having on both sides thereof a 0.01 to 1 µm thick antistatic coating comprising an antistatic agent and an organic polymeric binder, said antistatic coating having a specific surface resistance of not more than 1.0 × 10¹³ Ω, the antistatic coating on one side having formed thereon a hard coat comprising principally an acrylic acid derivative or a methacrylic acid derivative and having a specific surface resistance of not more than 1.0 × 10¹⁴ Ω, said film having a haze of not more than 5.0% as the whole structure and a visible light transmittance of 3 to 70%.
